# EUROPÄISCHE PATENTSCHRIFT

(11) **EP 2 240 815 B1**
(45) Veröffentlichungstag und Bekanntmachung des Hinweises auf die Patenterteilung: **22.08.2012**
(21) Anmeldenummer: 08872238.4
(22) Anmeldetag: 17.12.2008
(51) Int. Cl.: G03B 27/50, G03B 27/52, G03B 33/14, G03B 35/14, H04N 1/00, H04N 1/12

(54) **VORRICHTUNG UND VERFAHREN ZUM BELICHTEN EINES FOTOMATERIALS**
DEVICE AND METHOD FOR EXPOSING A PHOTO MATERIAL
DISPOSITIF ET PROCÉDÉ D'EXPOSITION D'UN MATÉRIAU PHOTOGRAPHIQUE

(30) Priorität: 08.02.2008 DE 102008008232
(43) Veröffentlichungstag der Anmeldung: 20.10.2010
(73) Patentinhaber: Realeyes Gmbh, 24106 Kiel (DE)
(72) Erfinder: RIEDEL, Wolfgang J., 79379 Mühlheim (DE); VON LAFFERT-KOBYLINSKI, Felix, 24105 Kiel (DE)
(74) Vertreter: Raffay & Fleck
(86) Internationale Anmeldenummer: PCT/EP2008/067732
(87) Internationale Veröffentlichungsnummer: WO 2009/097939

(56) Entgegenhaltungen:
- EP-A- 0 002 736
- EP-A- 0 996 022
- GB-A- 2 312 349
- US-A- 5 953 103
- US-A1- 2003 038 930
- US-A1- 2005 052 708

## Beschreibung

Die Erfindung betrifft ein Verfahren zum Belichten eines eine Vielzahl von vorzugsweise regelmäßig, insbesondere zeilenweise, angeordneten, einzeln zu belichtende Zonen aufweisenden Fotomaterials mit einem digital errechneten Bild mittels eines Belichters. Sie betrifft ferner einen Belichter zum Belichten eines eine Vielzahl von vorzugsweise regelmäßig, insbesondere zeilenweise, angeordneten, einzeln zu belichtenden Zonen aufweisenden Fotomaterials mit einem digital errechneten Bild.

### Stand der Technik

In der Theorie, auch im druckschriftlichen Stand der Technik, sind Fotosysteme beschrieben, die mittels eines auf einem Fotomaterial aufgelegten Linsen-Arrays einen dreidimensionalen Bildeindruck hervorrufen sollen. Hierfür wird durch jede Linse des Arrays ein Abbild des darzustellenden Bildobjektes auf das Fotopapier gebracht, bei der Wiedergabe wird dann das Bildnis durch das Linsen-Array hindurch betrachtet, so dass der Betrachter gleichzeitig Bilder aus unterschiedlichen Betrachtungswinkeln wahrnehmen kann und insoweit der dreidimensionale Eindruck entsteht. Ein Beispiel für diese Technologie ist beschrieben in der WO 2005/022255.

Auch wenn die Überlegungen zu dem Fotomaterial selbst bereits weit fortgeschritten sind, so gibt es insbesondere bisher noch keine technischen Vorstellungen darüber, mit welchen Mitteln und auf welche Weise ein solches Fotomaterial belichtet und so mit den dreidimensional wiederzugebenden Bildern versehen werden kann. Ein Problem ergibt sich insbesondere daraus, dass - vornehmlich aber nicht ausschließlich bei digital erzeugten Bildern - ein Belichter zum Erzeugen eines jeden durch die einzelne Linse des Arrays aufzunehmenden Bildes vor diese Linse gefahren werden und dort das entsprechende Bild erzeugen muss. Bei einer Anzahl von ohne weiteres mehreren hunderttausend Einzellinsen bedeutet dies eine Vielzahl von Einzelbelichtungen und eine entsprechende, aufwendige Verfahrprozedur. Um dies wirtschaftlich gestalten zu können, muss ein entsprechend rationales Verfahren geschaffen und es muss eine zur Durchführung dieses Verfahrens geeignete Vorrichtung angegeben werden, die eine entsprechend zügige Durchführung des Belichtungsvorganges ermöglichen.

### Darstellung der Erfindung

Dieses Verfahren bzw. eine solche Vorrichtung zu schaffen ist Ziel der hier beschriebenen Erfindung, wobei die so geschaffene Vorrichtung und das Verfahren in ihrer Anwendung nicht allein auf die Belichtung einer wie in der WO 2005/022255 angegebenen mit einem Linsen-Array überzogenen fotoempfindlichen Einrichtung ausgelegt sind, sondern grundsätzlich für eine rationale und wirtschaftliche Belichtung eines Fotomaterials mit einer Vielzahl einzeln zu belichtenden Zonen eingesetzt werden können sollen.

Diese Aufgabe wird erfindungsgemäß gelöst einerseits durch ein Verfahren mit den Merkmalen des Patentanspruches 1, zum anderen mittels eines Belichters, der die in Anspruch 10 zusammengefassten Merkmale aufweist.

Der erfindungswesentliche Gedanke liegt darin, den Belichter relativ zu der Oberfläche des Fotomaterials in einer kontinuierlichen Bewegung zu führen und dabei die Belichtung der einzelnen Zellen vorzunehmen. Dabei kommt es natürlich darauf an, dass die Zellen zielgerichtet und separat belichtet werden und nicht etwa während der kontinuierlichen Bewegung des Belichters eine später mit anderen Bildinformationen zu belichtende Nachbarzelle bereits mit dem für die vorherige Zelle bestimmten Licht belichtet wird. Grundsätzlich kommt es dabei nicht darauf an, ob der Belichter aktiv gegenüber dem Fotomaterial verschoben oder das Fotomaterial unterhalb eines ortsfesten Belichters entlang geführt wird oder gar eine Bewegung beider angegebener Komponenten, des Belichters sowie des Fotomaterials erfolgt. In der Praxis wird man jedoch insbesondere bei großflächigerem Fotomaterial den Belichter bewegen über ruhendes Fotomaterial.

Dabei führt der Belichter eine Abbildung mit in der Ebene der Austrittspupille im Wesentlichen parallelen, nach unendlich abgebildeten, die Bildinformationen tragenden Lichtstrahlen durch. Dann nämlich muss beim Verfahren des Belichters relativ zu dem Fotomaterial nicht mit einem im Belichter angeordneten, komplexen Aufbau eine Nachführung dieser Lichtstrahlen besorgt werden.

Dabei kann die Abbildung der Bildinformation ins Unendliche auch absichtlich mit plus oder minus 1 Dioptrie Abweichung davon geschehen. So können möglicherweise vorhandene geringfügige Abbildungsfehler der zu belichtenden Zonen ausgeglichen werden. Eine Abweichung von deutlich mehr als 1 Dioptrie ist in der Regel nicht sinnvoll, weil dann die eine Bildinformation tragenden Strahlen so wenig parallel sind, dass während der Belichtung im Zusammenspiel mit der Relativbewegung zwischen Fotomaterial und Belichter eine neue Unschärfequelle entsteht.

Dadurch, dass Belichter und Fotomaterial sich kontinuierlich relativ zu einander bewegen muss die Position zwischen Belichter und Fotomaterial nicht für jede Belichtung neu eingestellt werden, was insbesondere aufgrund des Aufnehmens der Bewegung und des Abbremsens und der genauen Positionierung zeitaufwendig ist. Dieser Zeitaufwand, der sich bei einer Vielzahl von Zonen, beispielsweise hunderttausend und mehr, addiert, ist erheblich und übersteigt die Summe der Belichtungszeiten für die einzelnen Zonen in der Regel deutlich.

Um Streulicht und Fehlbelichtungen zu vermeiden ist es von Vorteil, den Bereich des aus dem Belichter austretenden Lichtes dort, wo es auftreffen soll, scharf zu begrenzen, wünschenwerterweise innerhalb des zu belichtenden Fotomaterials oder in der Ebene der Eintrittspupille des zu belichtenden Fotomaterials. Hierfür kann eine Pupille abgebildet werden, um eine außerhalb des Belichters liegende Austrittspupille zu schaffen (vergleiche Anspruch 2).

Diese kontinuierliche Bewegung mit gleichzeitiger positionsgetreuer Belichtung kann in einem nicht erfindungsgemäßen verfahren dadurch verfolgt werden, dass die Belichtungszeit die Bewegungsdauer von einer ersten zu belichtenden Zone zu einer benachbarten, zweiten zu belichtenden Zone deutlich unterschreitet. Dabei werden Belichtungszeiten unterhalb von 0,1 Sekunden, insbesondere im Bereich von einigen Millisekunden, bevorzugt, um ein schnelles Belichten des gesamten Fotomaterials zu gewährleisten. Natürlich sind auch noch kürzere Belichtungszeiten im Bereich von µs oder gar weniger denkbar, solange noch eine ausreichende Lichtmenge für eine anforderungsgemäße Belichtung in die einzelnen Zonen gelangt.

In der erfindungsgemäßen Herangehensweise wird zur Verhinderung von Fehlbelichtung einer anderen Zone als der zu belichtenden Zone dadurch Sorge getragen, dass die Austrittspupille des Belichters sich entlang des Belichters ebenfalls relativ bewegt und so zumindest für die Dauer einer Belichtungszeit relativ zu dem Fotomaterial stillsteht. Die Austrittspupille kann dabei eine tatsächliche Blende oder eine projizierte Blende außerhalb oder am Ausgang des Belichters sein.

Bei einem Vorgehen nach dieser Variante der Erfindung bzw. mit einem entsprechend gestalteten erfindungsgemäßen Belichter verfährt der Belichter gegenüber dem Fotomaterial bzw. das Fotomaterial unterhalb des Belichters noch während der Belichtung einer vorhergehenden Zone schon in Richtung der nächsten Zone, lediglich die in der Regel sehr kleine und dadurch schnell zu bewegende Austrittspupille des Belichters muss dann nachgeführt werden und bewegt sich während der Belichtung der folgenden Zelle wieder relativ zu dem Belichtergehäuse bzw. an dem Belichter entlang. Es lässt sich auf diese Weise eine erhebliche Einsparung der Totzeiten, in denen nichts weiter erfolgt als ein Verschieben des Belichters relativ zu dem Fotomaterial, erzielen und somit die insgesamt erforderliche Zeit zum Belichten des gesamten Fotomaterials auf ein wirtschaftlich vertretbares Maß herabsetzen.

Bei dieser Variante sollte die Austrittspupille des Belichters in ihrer Öffnungsweite im .Wesentlichen der Eintrittspupille der Zonen entsprechen, diese jedoch vorzugsweise leicht übersteigen oder unterschreiten. So ist dann nämlich sichergestellt, dass selbst bei einer geringfügigen Relativbewegung oder Fehlorientierung zwischen der Austrittspupille und dem Fotomaterial während des Voranschreitens des Belichters die zu belichtende Zone mit einer definierten Lichtmenge belichtet wird. Eine wie oben beschriebene Relation zwischen Austrittspupille des Belichters und Eintrittspupille der Zonen ist dabei auch für die zuvor erwähnte Ausgestaltung des erfindungsgemäßen Verfahrens mit kurzer Belichtungsdauer von Vorteil.

Eine besonders einfache Methode mit der die aussenliegende Austrittspupille relativ zum Belichter bewegt werden kann, ist die, eine Pupille innerhalb des Belichters zumindest für die Dauer einer Belichtungszeit im Wesentlichen linear zu bewegen (vergleiche Anspruch 3). Dabei sind Abweichungen von der Linearität von bis zu 30° ohne größere Einbußen hinnehmbar. Solche Abweichungen treten beispielsweise dann auf, wenn die Pupille auf einem Kreis(abschnitt) bewegt wird, dessen Durchmesser jedoch groß genug ist um eine entsprechende Annäherung an eine lineare Bewegung zu ermöglichen.

Um schlechte Positionierungen zwischen Belichter und Fotomaterial zu vermeiden, sollen möglichst keine Vibrationen übertragen werden. Dies kann durch Vermeidung von Unwuchten und Massenbeschleunigungen erreicht werden. Unwuchten können vermieden werden, wenn im Belichter vorhandene Rotationskörper bezüglich ihrer Masseverteilung und Anordnung der Rotationsachse entsprechend konstruiert werden. Die Rotationsachse sollte dabei mit einer der Hauptträgheitsachsen des Rotationskörpers übereinstimmen und durch den Schwerpunkt des Rotationskörpers verlaufen. Unwuchten und Massebeschleunigungen können beispielsweise verringert werden, indem die dafür in Frage kommenden Bauteile möglichst wenig Masse haben (leicht sind).

Bei der Berechnung des optischen Systems sollte man darauf achten, eine Gesamtblende zu definieren, in der sich die Teilblende, die bewegte Pupille, befindet, und den Strahlengang für diese Gesamtblende optimieren. Hierdurch wird sichergestellt, dass die Qualität der optischen Abbildung relativ unabhängig von der Position der bewegten Pupille innerhalb der Gesamtblende wird.

Auch wenn, wie eingangs bereits ausgeführt, das Verfahren und der erfindungsgemäße Belichter grundsätzlich zum Belichten jedweden Fotomaterials eingesetzt werden kann, welches aufgrund welcher Vorgaben auch immer in unterschiedliche Zonen unterteilt ist, so findet die Erfindung ihre bevorzugte Anwendung doch in der Belichtung eines mit einem Linsen-Array überdeckten lichtempfindlichen Films als Fotomaterial (vgl. Anspruch 6).

Um ein Bild mit dreidimensionaler Wirkung herstellen zu können, sollte, wie in Anspruch 7 angegeben, der Belichter während des Belichtungsvorganges unterschiedliche Zonen mit Bildern aus verschobenen Betrachtungswinkeln belichten. Diese Bilder sind typischerweise von eine digitalen Bildrechnereinheit errechnet, gegebenenfalls (zwischen-)gespeichert und werden dem Belichter synchronisiert aufgegeben. Dabei können die Errechnung der Bilder und die synchronisierte Aufgabe auf den Belichter räumlich und zeitlich versetzt stattfinden. So können die Bilder bspw. in einem Rechenzentrum oder dergleichen berechnet werden (gegebenenfalls auch schon unter Berechnung konkreter auf diesen Bilddaten basierenden Steuerdaten für den Belichter) und dann auf einem Speichermedium, z.B. einer CD-ROM, einer DVD oder dergleichen, oder online zu dem Belichter verbracht werden.

Grundsätzlich ist es dabei möglich, dass mit dem erfindungsgemäßen Verfahren benachbarte Zonen in unterschiedlichen Farben belichtet werden, wobei diese die drei Grundfarben eines Farbmischsystems bilden sollten. Je nach späterer Wiedergabe (entweder nach Art eines Diapositivs oder aber nach Art eines Abzuges) können hier die Grundfarben des additiven bzw. subtraktiven Mischsystems Verwendung finden. Auf diese Weise würden dann diese Informationen aus drei benachbarten Zonen insgesamt ein vielfarbiges Bild im Auge des Betrachters hervorrufen. Gleichermaßen kann auch eine Zone nacheinander mit den Grundfarben eines Farbmischsystems belichtet werden, um so die farbigen Bildinformationen über die volle Breite des Spektrums in eine Zone einzuprägen.

Ein erfindungsgemäßer Belichter zum Belichten eines eine Vielzahl von vorzugsweise regelmäßig, insbesondere zeilenweise, angeordneten, einzeln zu belichtenden Zonen aufweisenden Fotomaterials mit einem digital errechneten Bild, weist in einer Belichtereinheit eine Bilderzeugungseinheit und eine Pupille auf, wobei die Belichtereinheit zum automatischen Verfahren relativ zu dem zu belichtenden Fotomaterial eingerichtet ist und wobei die Pupille relativ zu der Belichtereinheit in ihrer Position gesteuert derart veränderbar ist, dass ihr Bild, die Austrittspupille bei einem Verfahren der Belichtereinheit relativ zu dem Fotomaterial jedenfalls für die Dauer einer Belichtungszeit im Wesentlichen ortsfest in Bezug auf das Fotomaterial verbleibt. Dadurch kann eine scharfe Abbildung realisiert werden. Allerdings sind ohne große Qualitäts- beziehungsweise Schärfeinbußen Abweichungen von der Ortsfestheit während der Belichtungszeit, also Bewegungen innerhalb einer Belichtungszeit, von maximal 1/4 Zonenmittenabstand tolerabel.

Eine mögliche Ausgestaltung der relativ gegenüber dem Belichter bzw. seinem Gehäuse verschiebbaren Austrittspupille ist im abhängigen Vorrichtungsanspruch 11 angegeben. Mit einer rotierenden Scheibe, die eine quer zu einem Lichtdurchtrittsschlitz verlaufende, langgestreckte Öffnung aufweist und in ihrer Rotationsgeschwindigkeit mit der Vorschubgeschwindigkeit des Belichters relativ zu dem Fotomaterial korreliert ist, kann sehr einfach eine Bewegung der Austrittspupille relativ zu dem Belichter generiert werden, die in der Regel entgegengesetzt der Fortbewegungsrichtung des Belichters relativ zu dem Fotomaterial verlaufen wird.

Eine einfache Art und Weise, dies zu realisieren ist in Anspruch 12 angegeben. Durch die Anordnung der Scheibe mit ihrer Drehachse auf der Längsachse des Lichtdurchtrittsschlitzes und die spiralförmige Anordnung der Öffnung in der Scheibe ergibt sich durch die Drehbewegung der Scheibe ein lineares Fortschreiten der durch die Überlagerung des Längsschlitzes und der Öffnung in der Drehscheibe gebildeten Pupille entlang des Längsschlitzes. Auf der Scheibe können, wie in Anspruch 13 angegeben, zwei solche spiralförmig geführten Öffnungen angeordnet sein, durch die hindurch dann nacheinander Belichtungen zweier benachbarter Zonen vorgenommen werden. Zwischen den Öffnungen auf der Scheibe sind bevorzugt Winkelbereiche ohne Öffnung, die für den Belichter im Betrieb Zeiten ohne Belichtung vorgeben.

Alternativ ist es auch denkbar, anstelle einer langestreckten Öffnung auf einer analog angeordneten, sich drehenden Scheibe eine Vielzahl von vorzugsweise im wesentlichen kreisförmigen oder vergleichbar geformten Öffnungen anzuordnen, die bei der Rotation der Scheibe über einen entsprechenden, sich jedenfalls auch entlang der Bewegungslinie der Öffnungen der Scheibe erstreckende Lichtdurchtrittsöffnung geführt werden. Anstelle einer rotierenden Scheibe kann dann auch ein Lochstreifen linear über eine Öffnung hinweggeführt werden, um die sich relativ zu dem Gehäuse bewegende Austrittspupille zu bilden.

Die Bilderzeugungseinheit in dem Belichter kann z.B. mit Leuchtdioden (LED's) bestückt sein, vorzugsweise solchen in den Grundfarben rot, grün und blau. Mit diesen können z.B. durch gleichzeitiges Ansteuern aller LED's vollfarbige Bilder erzeugt werden, es können auch nacheinander Bilder generiert und auf das Fotomaterial belichtet werden, die die Farbinformationen in jeweils nur einer der Grundfarben enthalten.

Mit einem vorteilhafter Weise in dem Belichter angeordneten flächigen Lichtmodulator, insbesondere MMD oder LCoS, als Bestandteil der Bilderzeugungseinheit können auf besonders einfache und präzise Art und Weise die zu erzeugenden Bilder in Richtung der Austrittspupille gelenkt werden. Mit einem solchen flächigen Lichtmodulator (MMD/LCoS) werden die Bildinformationen dann getrennt nach Grundfarben nacheinander in die Zonen pixelaufgelöst projiziert.

Bereits aus der voranstehenden Schilderung dürfte deutlich sein, dass das erfindungsgemäße Verfahren und der erfindungsgemäße Belichter eine Vielzahl von neuen und erfinderischen Merkmalen tragen und gegenüber dem Stand der Technik erhebliche Vorteile mit sich bringen.

### Kurze Beschreibung der Abbildungen der Zeichnungen

Weitere Vorteile und mögliche Gestaltungsmerkmale der Erfindung ergeben sich aus der nachfolgenden Beschreibung eines Ausführungsbeispiels anhand der beigefügten Figuren. Dabei zeigen:
- Fig. 1: schematisch den Aufbau eines aus einer Vielzahl von Zonen bzw. Zellen zusammengesetzten Fotomaterials, welches mit dem erfindungsgemäßen Verfahren und dem erfindungsgemäßen Belichter belichtet werden kann,
- Fig. 2: schematisch den Aufbau eines Belichters gemäß der Erfindung mit den verschiedenen optischen Komponenten sowie dem Bildstrahlengang und
- Fig. 3: a) und b) die relativ zu dem Belichter bzw. Belichtergehäuse bewegbare Pupille in einer konstruktiven Umsetzung nach einem Ausführungsbeispiel der Erfindung in zwei verschiedenen Ansichten.

### Weg(e) zur Ausführung der Erfindung

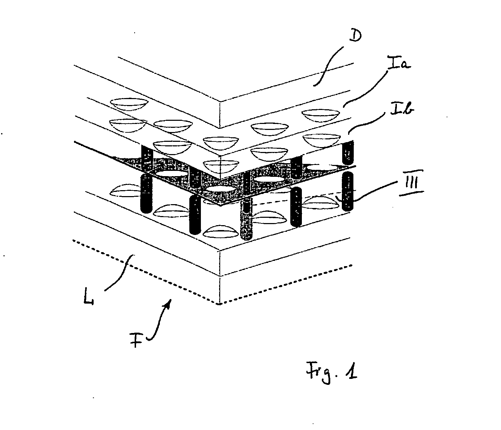

In Figur 1 ist zunächst zum besseren Verständnis der Erfindung der prinzipielle Aufbau eines mit dem erfindungsgemäßen Verfahren und dem erfindungsgemäßen Belichter zu belichten möglichen Fotomaterials F gezeigt. Das hier gezeigte Fotomaterial ist geeignet und soll verwendet werden, um dreidimensionale Bilder aufzunehmen und in dreidimensionaler Wirkung zur Betrachtung wiederzugeben. Hierzu ist das Fotomaterial F in eine Vielzahl von Zonen bzw. Zellen unterteilt, die jeweils mit einem Linsensystem und einer Blendenöffnung überdeckt sind. Das Fotomaterial setzt sich zusammen aus einer Deckschicht D, einer darunterliegenden ersten Meniskuslinsenschicht I mit vorderen konkaven Linsenoberflächen I a) und hinteren konvexen Linsenoberflächen I b), einer Blendenschicht B mit zonenweise verteilten Blendenöffnungen, einer zweiten Linsenschicht II unterhalb der Blendenschicht B und schließlich einer lichtempfindlichen Schicht L. Die einzelnen Linsen der zwei Linsenschichten, der Meniskuslinsenschicht I und der zweite Linsenschicht II, und die Blendenöffnungen der Blendenschicht B sind in vertikaler Richtung untereinander angeordnet und definieren so die einzelnen Zonen bzw. Zellen in der horizontalen Verteilung des Fotomaterials.

Um mit einem solchen Fotomaterial dreidimensionale Bilder in einer ansprechenden Größe aufnehmen und darstellen zu können, sind vorzugsweise mehrere hunderttausend einzelne Zonen gebildet aus jeweils einer Linse der Linsenschichten I, II sowie einer dazugehörigen Blende aus der Blendenschicht B und einem entsprechenden darunterliegenden Bereich der lichtempfindlichen Schicht L nebeneinander angeordnet und müssen bebildert werden. Insbesondere bei der Belichtung mit digital errechneten Bildern, die insgesamt virtuell erstellt worden sein können oder aber aufgrund einer natürlichen Vorlage rechnerisch in einzelne Bilder aus verschiedenen Betrachtungspositionen heraus umgesetzt oder aus einer Vielzahl von aus einer natürlichen Vorlage einzeln aus unterschiedlichen Betrachtungspositionen aufgenommenen und anschließend digitalisierten Bildern erhalten worden sind, muss ein Belichter jede einzelne dieser Zellen nacheinander belichten mit Bilddarstellungen aus unterschiedlichen Betrachtungspositionen, um am Ende einen dreidimensionalen Eindruck beim Betrachter hervorzurufen.

Dies erfolgt erfindungsgemäß mit einem Belichter, der relativ zu dem Fotomaterial F kontinuierlich bewegt wird und während dieser Bewegung die einzelnen Zellen bzw. Zonen belichtet.

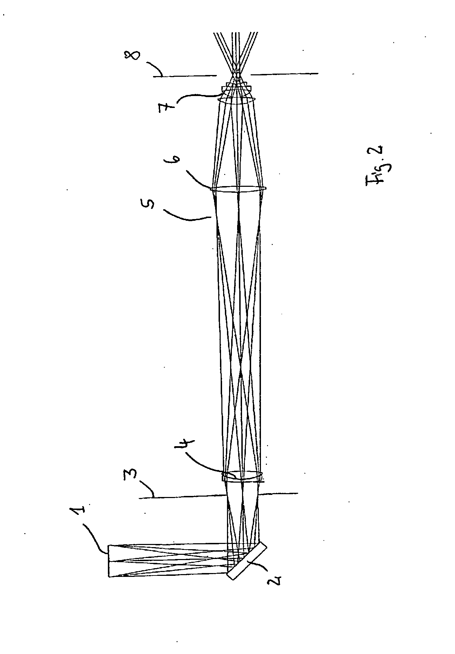

In Figur 2 ist schematisch der Aufbau einer Ausführungsvariante eines solchen Belichters mit den wichtigsten optischen Komponenten und dem Bildstrahlengang dargestellt. Ein solcher Belichter enthält eine Bilderzeugungseinheit 1, die bspw. als LCD-Einheit ausgebildet sein kann, auf der dann schon Pixel-genau ein farbiges Bild erzeugt wird. Alternativ kann hier auch ein LCoS angeordnet sein, wobei hier dann eine Beleuchtung mit mehreren, verschieden farbigen LED's erforderlich ist, um ein vollständiges farbiges Abbild zu erhalten. Die Umlenkung des von der Bilderzeugungseinheit 1 ausgehenden Lichtes in Richtung des Projektionsstrahlenganges erfolgt mit der Umlenkungseinrichtung 2, die entweder ein Spiegel oder ein Strahlteiler sein kann. Von der Umlenkeinrichtung 2 wird das Licht durch eine Pupille 3 gelenkt auf ein Objektiv 4. Von dort durchläuft das Licht ein Zwischenbild 5, in dem die Bilderzeugungseinheit 1 scharf abgebildet wird, weiter durch eine Feldlinse 6. Schließlich wird das Licht mittels eines Projektionsobjektivs 7 in Richtung der zu belichtenden Zonen bzw. Zellen geleitet und bildet in 8 die Austrittspupille als Bild der Pupille 3. Bei Belichtung eines Fotomaterials aus Figur 1 liegt die Ebene der so gebildeten Austrittspupille 8 genau in der Ebene der virtuellen Bilder der durch die Meniskuslinsenschicht I abgebildeten Blenden B.

Die gesamte Anordnung ist in einem Projektorgehäuse untergebracht, welches hier nicht gezeigt ist, und wird während des Belichtungsvorganges relativ zu dem Fotomaterial F verfahren bzw. bewegt, um die einzelnen Zonen anzusteuern und zu belichten.

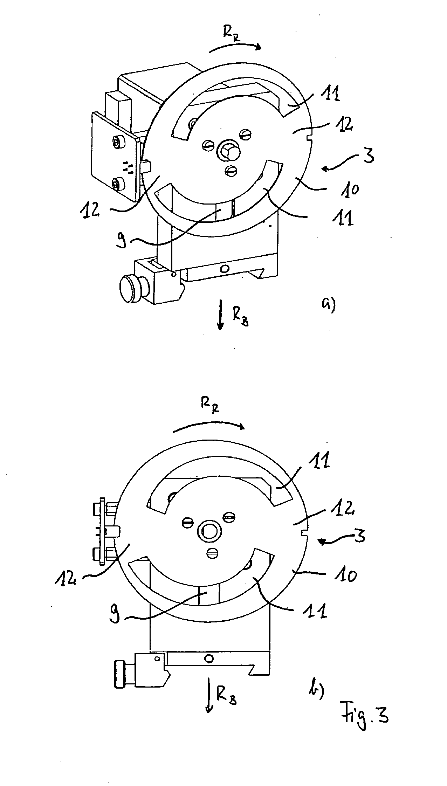

In Figur 3 schließlich ist zwei verschiedenen Ansichten (einer dreidimensionalen Ansicht schräg von vorn, Fig. 3a) und einer Ansicht von vorn (Fig. 3b)) in einem Ausführungsbeispiel eine mögliche mechanische Variante zur Schaffung einer relativ zu dem Gehäuse des Belichters sich verlagernden Austrittspupille mittels einer nach außerhalb des Belichters abgebildeten, innerhalb des Belichters liegenden Pupille 3 dargestellt. Die Pupille 3 wird hier realisiert durch Überlagerung eines in einem Barrierenelement gebildeten Lichtdurchtrittsschlitzes 9, der sich in Richtung einer hier mit R_{B} angedeuteten Bewegungsrichtung des Belichters relativ zu dem Fotomaterial erstreckt, sowie einem vor diesem Lichtdurchtrittsschlitzes 9 angeordneten, mit seiner Drehachse auf der Längsachse des Lichtdurchtrittsschlitzes 9 gelegenen Blendenrad 10. Das Blendenrad 10 hat in diesem Ausführungsbeispiel zwei Längsöffnungen 11, die sich angenähert in Umfangsrichtung des Blendenrades 10 erstrecken, jedoch spiralförmig ausgehend von einem geringen Abstand zum Rand des Blendenrades 10 bis zu einem Bereich mit einem größeren solchen Abstand.

Zwischen den Längsöffnungen 11 sind verschlossene Bereiche 12, in denen das Blendenrad 10 frei von jeglichen Durchbrüchen ist.

Im Betrieb des hier erörterten Ausführungsbeispiels eines erfindungsgemäßen Belichters und bei einer Ausführungsvariante zur Durchführung des erfindungsgemäßen Verfahrens wird das Blendenrad 10 koordiniert mit der Fortbewegungsgeschwindigkeit in Bewegungsrichtung R_{B} in Rotationsrichtung R_{R} bewegt, wobei durch den zunehmenden Abstand der über den Lichtdurchtrittsschlitz 9 hinweg streichenden Öffnung 11 vom Rand des Blendenrades 10 die durch Überlagerung dieser beiden Elemente gebildete Pupille 3 sich entgegen der Bewegungsrichtung R_{B} verschiebt, und zwar durch die Wahl der Relation zwischen der Bewegungsgeschwindigkeit gegen die Richtung der Bewegungsrichtung R_{B} und der Rotationsgeschwindigkeit in Richtung R_{R} in einer solchen Weise, dass ihr umgekehrtes Bild, die Austrittspupille 8 relativ zu der Oberfläche des lichtempfindlichen Materials im Wesentlichen ortsfest verbleibt.

Auf diese Weise wird der Belichter relativ zu dem fotoempfindlichen Material bereits weitergeführt, obwohl die Belichtung mit dem durch die Austrittspupille 8 hindurch fallenden Licht zum Fotomaterial relativ still steht. Wenn die Öffnung 11 mit ihrem in Rotationsrichtung R_{R} gesehen hintersten Ende über den Lichtdurchtrittsschlitz 9 hinweg gestrichen ist, verdeckt ein geschlossener Bereich 12 diesen Schlitz, so dass die Pupille 3 geschlossen ist. Auf diese Weise wird verhindert, dass in einem Übergangsbereich zwischen zwei Zonen eine unerwünschte Doppelbelichtung zweier Zonen erfolgen kann. Bei einem weiteren Drehen des Blendenrades 10 tritt die nächste Längsöffnung 11 mit ihrem nahe an dem Außenrand des Blendenrades 10 gelegenen Bereich über den Lichtdurchtrittsschlitz 9, so dass die Austrittspupille 8 - als Bild der dadurch gebildeten Pupille 3 - wieder auf die Eintrittspupille der nächsten zu belichtenden Zone fällt und durch weitere Rotation des Blendenrades 10 relativ zu dem Belichtergehäuse verlagert wird, jedoch zu der zu belichtenden Zone im Wesentlichen ortsfest verbleibt.

Es dürfte einleuchten, dass mit dieser Methode ein schnelles und kontinuierliches Fortbewegen des Belichters über das zu belichtende Fotomaterial möglich ist bei gleichzeitiger sicherer und klar getrennter Belichtung der einzelnen Zonen.

Dabei dürfte ebenfalls klar sein, dass das gezeigte Ausführungsbeispiel nicht die einzige Möglichkeit darstellt, eine sich relativ zu einem kontinuierlich bewegten Belichter verlagernde Austrittspupille zu schaffen. Dies ist ohne weiteres auch möglich mit einem Blendenrad mit kreisförmigen oder in geeigneter Weise anders geformten Öffnungen, welches auch mit einem zu der Radebene gewinkelten Bereich für die Löcher oder mit Exzenter ausgestattet sein kann, mit einem Lochstreifen mit geraden oder gebogenen Kanten, als oszillierende Lochblende mit Linearantrieb oder Nockenwellengetrieben oder mit sonstigen, dem Fachmann geläufigen Mitteln.

### Bezugszeichenliste

- 1: Bilderzeugungseinheit
- 2: Umlenkeinrichtung
- 3: Pupille
- 4: Objektiv für Zwischenbild
- 5: Zwischenbild
- 6: Feldlinse
- 7: Projektionsobjektiv
- 8: Austrittspupille
- 9: Lichtdurchtrittsschlitz
- 10: Blendenrad
- 11: Längsöffnung
- 12: verschlossener Bereich

- B: Blendenschicht
- D: Deckschicht
- F: Fotomaterial
- I a): vordere Linsenoberflächen der ersten Linsenschicht
- I b): hintere Linsenoberflächen der ersten Linsenschicht
- II: zweite Linsenschicht
- L: lichtempfindliche Schicht
- R_{B}: Bewegungsrichtung
- R_{R}: Rotationsrichtung

## Patentansprüche

1. Verfahren zum Belichten eines eine Vielzahl von vorzugsweise regelmäßig, insbesondere zeilenweise, angeordneten, einzeln zu belichtenden Zonen aufweisenden Fotomaterials mit einem digital errechneten Bild mittels eines Belichters, bei welchem Verfahren eine kontinuierliche Relativbewegung zwischen dem Fotomaterial und dem Belichter durchgeführt wird und während dieser Bewegung die Belichtung der einzelnen Zonen erfolgt **dadurch gekennzeichnet, dass** der Belichter im Strahlengang eines Belichtungslichtstrahls bzw. -strahlbündels eine Austrittspupille aufweist, dass der Belichter kontinuierlich relativ zu dem Fotomaterial über dessen Oberfläche hinweg bewegt wird, dass die Austrittspupille in ihrer Position relativ zu dem Belichter derart verändert wird, dass sie während der kontinuierlichen Bewegung des Belichters relativ zu dem Fotomaterial zumindest für die Dauer einer Belichtungszeit im Wesentlichen ortsfest bezogen auf die zu belichtende Zone bleibt und dass der Belichter eine Abbildung mit in der Austrittspupille im Wesentlichen parallelen, nach unendlich abgebildeten, die Bildinformationen tragenden Belichtungslichtstrahlen durchführt.

2. Verfahren nach Anspruch 1, **dadurch gekennzeichnet, dass** zum Schaffen der Austrittspupille eine Pupille nach außerhalb des Belichters abgebildet wird, vorzugsweise nach innerhalb des zu belichtenden Fotomaterials oder in die Ebene der Eintrittspupille des zu belichtenden Fotomaterials.

3. Verfahren nach den Anspruch 2, **dadurch gekennzeichnet, dass** die Pupille innerhalb des Belichters zumindest für die Dauer einer Belichtungszeit im Wesentlichen linear bewegt wird.

4. Verfahren nach Anspruch 3, **dadurch gekennzeichnet, dass** die Pupille innerhalb des Belichters in einer solchen Weise linear bewegt wird, dass während einer kontinuierlichen Bewegung des Belichters keine Vibrationen durch Unwuchten oder Massenbeschleunigungen auf den Rest des Belichters übertragen werden.

5. Verfahren nach einem der vorhergehenden Ansprüche, **dadurch gekennzeichnet, dass** die Austrittspupille eine Öffnungsweite aufweist, die im Wesentlichen der Eintrittspupille der Zonen entspricht, diese jedoch vorzugsweise geringfügig übersteigt oder unterschreitet.

6. Verfahren einem der vorhergehenden Ansprüche, **dadurch gekennzeichnet, dass** das Fotomaterial eine über einer lichtempfindlichen Schicht angeordnete Lage aus nebeneinander angeordneten Abbildungslinsen oder Abbildungslinsensystemen aufweist wobei eine zu belichtende Zone durch die Eintrittspupille einer Abbildungslinse bzw. eines Abbildungslinsensystems bestimmt wird.

7. Verfahren nach einem der vorhergehenden Ansprüche, **dadurch gekennzeichnet, dass** während des Belichtungsvorganges unterschiedliche Zonen mit in dem Belichter erzeugten, digital errechneten Bilder mit verschobenen Betrachtungspositionen belichtet werden.

8. Verfahren nach einem der vorhergehenden Ansprüche, **dadurch gekennzeichnet, dass** während des Belichtungsvorganges benachbarte Zonen mit in dem Belichter erzeugten, digital errechneten Bildinformationen in je einer der drei Grundfarben eines Farbmischsystems belichtet werden.

9. Verfahren nach einem der Ansprüche 1 bis 7, **dadurch gekennzeichnet, dass** während des Belichtungsvorganges eine Zone nacheinander mit in dem Belichter erzeugten, digital errechneten Bildinformationen in je einer der drei Grundfarben eines Farbmischsystems belichtet wird.

10. Belichter zum Belichten eines eine Vielzahl von vorzugsweise regelmäßig, insbesondere zeilenweise, angeordneten, einzeln zu belichtenden Zonen aufweisenden Fotomaterials (F) mit einem digital errechneten Bild, welcher in einer Belichtereinheit eine Bilderzeugungseinheit (1) und eine Pupille (3) aufweist, wobei die Belichtereinheit zum automatischen Verfahren relativ zu dem zu belichtenden Fotomaterial eingerichtet ist und wobei die Pupille (3) relativ zu der Belichtereinheit in ihrer Position gesteuert derart veränderbar ist, dass ihr Bild, die Austrittspupille (8) bei einem Verfahren der Belichtereinheit relativ zu dem Fotomaterial (F) jedenfalls für die Dauer einer Belichtungszeit im Wesentlichen ortsfest in Bezug auf das Fotomaterial (F) verbleibt, **dadurch gekennzeichnet, dass** er eine Abbildungseinrichtung umfasst, die zum Erzeugen von in der Ebene der Austrittspupille (3) im Wesentlichen parallelen, nach unendlich abgebildeten, die Bildinformationen tragenden Belichtungslichtstrahlen eingerichtet ist.

11. Belichter nach Anspruch 10, **dadurch gekennzeichnet, dass** er einen Linearantrieb aufweist zum linearen, in der Geschwindigkeit gesteuerten Verfahren der Belichtereinheit relativ zu dem Fotomaterial, dass er ferner einen in der Belichtereinheit angeordneten, in Richtung einer Bewegungsrichtung (R_{B}) derselben beim Verfahren relativ zu dem Fotomaterial verlaufenden Lichtdurchtrittsschlitz (9) aufweist, über dem eine rotierbare Scheibe (10) angeordnet ist, wobei in der rotierbaren Scheibe (10) wenigstens eine langgestreckte Öffnung (11) ausgebildet ist, welche sich quer zu dem Lichtdurchtrittsschlitz (9) erstreckt und diesen zur Bildung der Pupille (3) überdeckt, wobei die Öffnung (11) so entlang der Scheibe (10) geführt ist, dass bei einer Rotation der Scheibe (10) die Pupille (3) entlang des Lichtdurchtrittsschlitzes (9) verlagert wird, und dass Mittel zum Korrelieren der Geschwindigkeit der Rotation der Scheibe (10) und der Geschwindigkeit der linearen Fortbewegung des Gehäuses relativ zu dem Fotomaterial in der Weise vorhanden sind, dass zumindest für die Dauer einer Belichtungszeit die Austrittspupille (8) im wesentlichen ortsfest in Bezug auf die Oberfläche des Fotomaterials (F) verbleibt.

12. Belichter nach Anspruch 11, **dadurch gekennzeichnet, dass** die Scheibe (10) mit ihrer Drehachse auf der Längsachse des Lichtdurchtrittsschlitzes (9) in diesem oder in seiner Verlängerung angeordnet ist und dass die wenigstens eine Öffnung (11) spiralförmig um die Drehachse vom Rand der Scheibe (10) her nach innen geführt ist.

13. Belichter nach Anspruch 12, **dadurch gekennzeichnet, dass** auf der Scheibe (10) zwei symmetrisch angeordnete, spiralförmig verlaufende Öffnungen (11) angeordnet sind und zwischen den Öffnungen Umfangsbereiche (12) liegen, in denen die Scheibe (10) frei von Öffnungen ist.

14. Belichter nach einem der Ansprüche 10 bis 13, **dadurch gekennzeichnet, dass** die Bilderzeugungseinheit (1) LED's, vorzugsweise LED's in den Grundfarben rot, grün und blau, aufweist.

## Claims

1. A method for exposing a photo material having a large number of zones to be exposed individually, arranged preferably regularly, in particular line-by-line, with a digitally calculated image by means of an exposure device, for which method a continuous relative movement is carried out between the photo material and the exposure device and whereas the individual zones are exposed during said movement, **characterised in that** the exposure device comprises an exit pupil in the optical path of an exposure light beam or bunch beam, that the exposure device is moved continuously with respect to the photo material over the surface thereof, that the position of its exit pupil is modified with respect to the exposure device in such a way that it remains more or less fixed relative to the zone to be exposed during the continuous movement of the exposure device with respect to the photo material at least for the duration of a length of exposure and that the exposure device creates an image with substantially parallel exposure light beams carrying the image information, after an endless number of copies.

2. The method of claim 1, **characterised in that** a pupil is copied towards the outside of the exposure device for creating the exit pupil, preferably towards the inside of the photo material to be exposed or into the plane of the entrance pupil of the photo material to be exposed.

3. The method of claim 2, **characterised in that** the pupil is moved more or less linearly inside the exposure device at least for the duration of a length of exposure.

4. The method of claim 3, **characterised in that** the pupil is moved linearly inside the exposure device in such a way that during a continuous movement of the exposure device no vibrations are transmitted as a result of unbalance or mass accelerations onto the rest of the exposure device.

5. A method according to any of the preceding claims, **characterised in that** the exit pupil has an opening width which more or less matches to the entrance pupil of the zones, but is preferably slightly larger or smaller than said entrance pupil.

6. A method according to any of the preceding claims, **characterised in that** the photo material has a layer arranged over a photosensitive coat consisting of copy lenses or copy lens systems arranged close to one another whereas a zone to be exposed is determined via the entrance pupil of a copy lens or of a copy lens system.

7. A method according to any of the preceding claims, **characterised in that** during the exposure process different zones are exposed with digitally calculated images generated in the exposure device and with shifted vantage points.

8. A method according to any of the preceding claims, **characterised in that** during the exposure process neighbouring zones are exposed with digitally calculated image information, generated in the exposure device, respectively in each of the three fundamental colours of a colour mixing system.

9. The method according to one of the claims 1 to 7, **characterised in that** during the exposure process a zone is exposed in succession with digitally calculated image information, generated in the exposure device, respectively in each of the three fundamental colours of a colour mixing system.

10. An exposure device for exposing a photo material (F) having a large number of zones to be exposed individually, arranged preferably regularly, in particular line-by-line, with a digitally calculated image, which comprises an image generating unit (1) and a pupil (3) in an exposure unit, whereas the exposure unit for the automatic method is set up with respect to the photo material to be exposed and whereas the position of the pupil (3) can be modified with respect to the exposure unit in a controlled manner so that it image, the exit pupil (8), in the case of a method of the exposure unit with respect to the photo material (F), always remains fixed in relation to the photo material (F) for the duration of a length of exposure, **characterised in that** it contains an imaging device, which is set up for generating exposure light beams, which are more or less parallel on the plane of the exit pupil (3), carrying the image information, after an endless number of copies.

11. The exposure device of claim 10, **characterised in that** it contains a linear drive for linear process (whose speed can be controlled) of the exposure unit with respect to the photo material, that it moreover contains a light passage slit (9) arranged in the exposure unit, in the direction of movement (RB) of the same during the process and extending with respect to the photo material, over which a rotatable disc (10) is provided, whereas at least one elongated opening (11) is designed in the rotatable disc (10), which extends crosswise to the light passage slit (9) and covers the same to form the pupil (3), whereas the opening (11) runs along the disc (10) in such a way that in case of rotation of the disc (10) the pupil (3) is translated along the light passage slit (9), and that means for correlating the speed of the rotation of the disc (10) and the speed of the linear further movement of the casing are present with respect to the photo material in such a way that at least for the duration of a length of exposure, the exit pupil (8) remains more or less fixed in relation to the surface of the photo material (F).

12. The exposure device of claim 11, **characterised in that** the disc (10) is arranged with its rotational axis on the longitudinal axis of the light passage slit (9) in said slit or its extension and that said at least one opening (11) runs inwardly and spirally around the rotational axis from the rim of the disc (10).

13. The exposure device of claim 12, **characterised in that** two openings extending spirally are arranged symmetrically on the disc and that peripheral areas (12) lie between the openings, in which the disc (10) has no openings.

14. The exposure device according to one of the claims 10 to 13, **characterised in that** the image generating unit (1) has LED, preferably LED in the fundamental colours, red, green and blue.

## Revendications

1. Procédé d'exposition d'un matériel photo présentant un grand nombre de zones à exposer individuellement, disposées de préférence régulièrement, en particulier en lignes, comportant une image calculée numériquement, à l'aide d'un appareil d'exposition, au cours duquel procédé on observe un mouvement relatif continu entre le matériel photo et l'appareil d'exposition et les différentes zones sont exposées pendant ce mouvement, **caractérisé en ce que** l'appareil d'exposition présente une pupille de sortie dans le chemin optique d'un rayon de lumière d'exposition ou d'un faisceau de rayons de lumière d'exposition, que l'appareil d'exposition se déplace de façon continue par rapport au matériel photo au-dessus de la surface de celui-ci, que la position de la pupille de sortie est modifiée par rapport à l'appareil d'exposition de telle sorte qu'elle reste plus ou moins fixe par rapport à la zone à exposer, pendant le mouvement continu de l'appareil d'exposition par rapport au matériel photo au moins pendant la durée d'un temps d'exposition et que l'appareil d'exposition réalise une copie avec les rayons de lumière d'exposition sensiblement parallèle dans la pupille de sortie et portant les informations d'image, après un nombre infini de copies.

2. Procédé selon la revendication 1, **caractérisé en ce que** pour créer la pupille de sortie, une pupille est copiée vers l'extérieur de l'appareil d'exposition, de préférence vers l'intérieur du matériel photo à exposer ou bien dans le plan de la pupille d'entrée du matériel photo à exposer.

3. Procédé selon la revendication 2, **caractérisé en ce que** la pupille se déplace de façon plus ou moins linéaire à l'intérieur de l'appareil d'exposition au moins pour la durée d'un temps d'exposition.

4. Procédé selon la revendication 3, **caractérisé en ce que** la pupille se déplace de façon linéaire à l'intérieur de l'appareil d'exposition de telle sorte que pendant un mouvement continu de l'appareil d'exposition aucune vibration n'est transmise suite à un déséquilibre ou des accélérations des masses vers le reste de l'appareil d'exposition.

5. Procédé selon l'une quelconque des revendications précédentes, **caractérisé en ce que** la pupille de sortie présente une largeur d'ouverture, qui correspond sensiblement à la pupille d'entrée des zones, mais qui cependant de préférence est légèrement supérieure ou inférieure à celle-ci.

6. Procédé selon l'une quelconque des revendications précédentes, **caractérisé en ce que** le matériel photo présente une couche composée de lentilles de copie ou de systèmes de lentilles de copie disposés l'un à côté de l'autre et au-dessus d'un revêtement photosensible, dans lequel une zone à exposer est définie par la pupille d'entrée d'une lentille de copie ou d'un système de lentilles de copie.

7. Procédé selon l'une quelconque des revendications précédentes, **caractérisé en ce que** pendant le cycle d'exposition différentes zones sont exposées avec les images calculées numériquement et produites dans l'appareil d'exposition, avec des positions d'observation décalées.

8. Procédé selon l'une quelconque des revendications précédentes, **caractérisé en ce que** pendant le cycle d'exposition des zones adjacentes sont exposées avec les informations d'image calculées numériquement et produites dans l'appareil d'exposition, respectivement dans chacune des trois couleurs fondamentales d'un système de mélange des couleurs.

9. Procédé selon l'une quelconque des revendications 1 ou 7, **caractérisé en ce que** pendant le cycle d'exposition une zone est exposée l'une après l'autre avec les informations d'image calculées numériquement et produites dans l'appareil d'exposition, respectivement dans chacune des trois couleurs fondamentales d'un système de mélange des couleurs.

10. Appareil d'exposition permettant l'exposition d'un matériel photo (F) présentant un grand nombre de zones à exposer individuellement, disposées de préférence régulièrement, en particulier en lignes, comportant une image calculée numériquement, qui présente dans une unité d'exposition une unité génératrice d'images (1) et une pupille (3), dans lequel l'unité d'exposition permettant un cycle automatique est configurée par rapport au matériel photo à exposer et dans lequel la position de la pupille (3) peut être modifiée de manière contrôlée par rapport à l'unité d'exposition, que son image, la pupille de sortie (8) demeure plus ou moins fixe par rapport au matériel photo (F) pendant un cycle de l'unité d'exposition par rapport au matériel photo (F) dans tous les cas pour la durée d'un temps d'exposition, **caractérisé en ce qu'**il comporte un dispositif d'imagerie, qui est configuré pour générer des rayons de lumière d'exposition, sensiblement parallèles, portant les informations d'image, après un nombre infini de copies.

11. Appareil d'exposition selon la revendication 10, **caractérisé en ce qu'**il présente un entraînement linéaire par rapport au procédé linéaire, dont la vitesse est contrôlée, procédé de l'unité d'exposition par rapport au matériel photo, qu'il présente en outre une fente de passage de lumière (9), disposée dans l'unité d'exposition, en direction d'un mouvement (RB) de celui-ci lors du procédé par rapport au matériel photo, fente au-dessus de laquelle un disque rotatif (10) est disposé, dans lequel au moins une ouverture allongée (11) est formée dans le disque rotatif (10), laquelle ouverture s'étend perpendiculairement à la fente de passage de lumière (9) et recouvre ladite fente pour constituer la pupille (3), dans lequel l'ouverture (11) passe le long du disque (10) de telle sorte que lors d'une rotation du disque (10) la pupille (3) est déviée le long de la fente de passage de lumière (9), et que des moyens de corrélation de la vitesse de rotation du disque (10) et de la vitesse du poursuite du mouvement linéaire du bâti par rapport au matériel photo de telle sorte qu'au moins la pupille de sortie (8) demeure plus ou moins fixe par rapport à la surface du matériel photo (F) pour la durée d'un temps d'exposition.

12. Appareil d'exposition selon la revendication 11, **caractérisé en ce que** le disque (10) est disposé avec son axe de rotation sur l'axe longitudinal de la fente de passage de lumière (9) dans celle-ci ou dans son prolongement et que ladite au moins une ouverture (11) est guidée en forme de spirale autour de l'axe de rotation du bord du disque (10) vers l'intérieur.

13. Appareil d'exposition selon la revendication 12, **caractérisé en ce que** deux ouvertures spiralées sont disposées de manière symétrique sur le disque et que des zones périphériques (12) sont situées entre les ouvertures, zones dans lesquelles le disque (10) ne comporte pas d'ouvertures.

14. Appareil d'exposition selon l'une des revendications 10 à 13, **caractérisé en ce que** l'unité génératrice d'images (1) présente des DEL, de préférence des DEL dans les couleurs fondamentales, rouge, verte et bleue.
